Europäisches Patentamt

European Patent Office

Office européen des brevets

(11) Veröffentlichungsnummer: **0 153 465**
**B1**

(12) **EUROPÄISCHE PATENTSCHRIFT**

(45) Veröffentlichungstag der Patentschrift: **14.03.90**

(21) Anmeldenummer: **84115045.1**

(22) Anmeldetag: **10.12.84**

(51) Int. Cl.⁵: **F 16 J 9/20,** F 16 J 9/06, F 16 J 9/10

(54) **Ölabstreifring mit veränderbarer nach aussen gerichteter Anpresskraft für Verbrennungsmotoren.**

(30) Priorität: **15.02.84 DE 3405349**

(43) Veröffentlichungstag der Anmeldung:
**04.09.85 Patentblatt 85/36**

(45) Bekanntmachung des Hinweises auf die
Patenterteilung:
**14.03.90 Patentblatt 90/11**

(84) Benannte Vertragsstaaten:
**AT DE FR GB IT SE**

(56) Entgegenhaltungen:
**DE-C- 716 104**
**GB-A- 724 936**
**GB-A-1 540 388**

(73) Patentinhaber: **MAHLE GMBH**
**Pragstrasse 26-46 Postfach 50 07 69**
**D-7000 Stuttgart 50 (DE)**

(72) Erfinder: **Ripberger, Emil**
**Brunnenstrasse 6**
**D-7148 Remseck (DE)**

(74) Vertreter: **Pfusch, Volker, Dipl.-Ing.**
**MAHLE GMBH Patentabteilung Pragstrasse 26-**
**46 Postfach 50 07 69**
**D-7000 Stuttgart 50 (DE)**

Courier Press, Leamington Spa, England.

**Beschreibung**

Die Erfindung betrifft einen mit Federmitteln versehenen Ölabstreifung für Kolben von insbesondere Verbrennungsmotoren.

Zwischen dem mit Kolbenringen bestücken Kolben und der Zylinderwand treten im Motorbetrieb Reibverluste auf. Diese setzen sich zusammen aus einem Anteil, der sich aus der Kolbenlauffläche ergibt sowie den Anteilen aus den Verdichtungsringen und dem Ölabstreifring bzw.-ringen. Dabei entfällt in der Regel auf die Ölabstreifringe ein relativ hoher Anteil.

Man ist daher schon seit einiger Zeit bestrebt, die durch den oder die Ölabstreifringe bewirkten Reibverluste zu senken. Dabei hat man u. a. daran gedacht, die Anpreßkraft des Ölabstreifringes von den sich änderenden Betriebsbedingungen abhängig zu machen. Es wird dabei von der Überlegung ausgegangen, daß im Leerlauf bzw. Teillastbetrieb des Motors die Anpreßkraft des Ringes eine niedrigere sein kann als im Vollastbetrieb.

Zur Erzielung der Veränderung der Anpreßkraft eines Kolbenringes sind bereits aus der DE—A—18 04 869 und GB—A—724 936 gattungsmäßig ausgerüstete Ölabstreifringe bekannt.

Das sich temperaturabhängig verformende Material ist dort ein Thermo-Bl-Metall, dessen Arbeitsleistung bei den kleinen Volumenabmessungen des gattungsmäßigen Ölabstreifringes sich als zu gering erwiesen hat.

Hiervon ausgehend liegt der Erfindung die Aufgabe zugrunde, das Thermo-Bl-Metall durch ein sich bei Temperaturveränderungen mit höherer Kraft verformendes Material zu ersetzen.

Gelöst wird diese Aufgabe durch den Einsatz eines Materials nach dem kennzeichnenden Teil des Hauptanspruchs.

Die Memory-Legierungen, für deren Einsatz bei Ölabstreifringen der Schutz begehrt wird, sind im Stand der Technik bekannt und werden teilweise auch als Formgedächtnis-Legierungen bezeichnet. Eine Beschreibung der für die erfindungsgemäße Anwendung interessanten Eigenschaften dieser Legierungen sowie deren physikalischen Aufbau enthält die Zeitschrift KEM 1983, Oktober, Seiten 69—70. Nach den dortigen Ausführungen erinnert sich eine sogenannte Formgedächtnis- oder Memory-Legierung für den Fall, daß sie bei tiefer Temperatur bleibend verformt wurde, bei Erwärmung über eine kritische Temperatur an ihre ursprüngliche Form und nimmt diese wieder an. Nach der dortigen Beschreibung beruht dieser außergewöhnliche Effekt auf einer Phasenumwandlung, d. h. der Werkstoff hat zwei mögliche Kristallstrukturen. Die bei tiefer Temperatur vorliegende Phase heißt Martensit, diejenige bei höherer Temperatur wird hingegen als Austenit bezeichnet. Beim Erwärmen des verformten Martensit-Gefüges einer Memory-Legierung treten die ursprünglichen Orientierungen des Austenit-Gitters auf, wodurch zwangsläufig eine Gestaltrückkehr erfolgt. In Abhängigkeit von der Größe der Martensit-Verformung können unterschiedliche Effektgrößen und -arten (Einweg- bzw. Zweiwegeffekt) induziert werden. Von Interesse ist hier lediglich der Zweiwegeffekt, der unterschiedliche Formen bei unterschiedlichen Temperaturen aus bei häufigen Temperaturwechseln sicher gewährleistet.

Gegenüber Bl-Metall-Material hat das vorbeschriebene Memory-Material vor allem folgende Vorteile:

— Große Arbeitsleistung pro Volumeneinheit
— Vollständige Arbeitsverrichtung in einem kleinen Temperaturintervall
— Möglichkeit zur Durchführung verschiedener Bewegungsarten (Zug, Druck, Biegung, Torsion)
— Der Formänderungseffekt kann auf bestimmte Elementbereiche beschränkt werden.

Aus der DE—C—716 104 ist bereits ein bei langen Betriebszeiten wachsendes Material für Kolbenringe bekannt. Bei jenem Material ist allerdings die Formveränderung nicht reversibel. Jenes Material ist lediglich in der Lage, im Laufe der Betriebszeit zu wachsen, um damit verschleißbedingte Abtragungen an der Ringaußenfläche auszugleichen. Eine Formveränderung des Ringes bei wechselnden Lastbereichen des Motors ist mit jenem Material dagegen nicht möglich.

Zweckmäßige Ausgestaltungen des Erfindungsgegenstandes sind in den Unteransprüchen beschrieben.

Für die Ausbildung des Erfindungsgegenstandes nach den unteransprüchen waren folgende Überlegungen maßgebend. Bei Memoy-Legierungen läuft die Formänderung in einem relativ kleinen exakt vorbestimmbaren Temperaturbereich, z.B. 10—20 Grad K ab. Bei Temperaturveränderungen außerhalb dieses vorgegebenen Bereiches erfolgen bei jenen Legierungen keine Formänderungen.

Will man daher über einen größeren Temperaturbereich mit Temperaturänderungen in einer Richtung gleichzeitig kontinuierlich Formänderungen ebenfalls in einer Richtung erzielen, so ist es erforderlich, mehrere Memory-Materialien mit unterschiedlichen Temperaturverformungsbereichen so miteinander kombinieren, daß über einen größeren Temperaturbereich kontinuierlich eine in vorgegebener Richtung ablaufende Formänderung bewirkt wird.

Die wärmedämmende Isolierschicht nach Anspruch 6 hat den Zweck, die auf das Memory-Material einwirkenden Temperaturen zu erniedrigen, da der Formänderungseffekt bei Temperaturen um 200°C teilweise nur noch schwer zu erreichen sind. Ausführungsbeispiele der Erfindung sind in der Zeichnung dargestellt. Es ziegen

Fig. 1 einen Ölabstreifring mit zu einem Ring zusammengefügten zylindrischen Federabschnitten im Schnitt nach Linie I/I

Fig. 2 einen Schnitt durch den Ölabstreifring nach Linie II/II

Fig. 3 einen Schnitt durch einen Ölabstreifring mit axial übereinanderliegenden Federmitteln

Fig. 4 einen Schnitt durch einen Ölabstreifring mit radial hintereinanderliegenden Federmitteln nach Linie IV/IV

Fig. 5 einen Schnitt durch einen in einer Ringnut eines Kolbens gelagerten Ölabstreifring nach Linie V/V in Fig. 4.

Der Ölabstreifring 1 wird durch einzelne zylindrische Federelemente 2, die auf einem Draht 3 zu einem geschlossenen Kreisring aufgereiht sind, radial nach außen gespannt. Die Federelemente 2 bestehen aus einem zylindrisch aufgewickelten Federdraht aus einer Memory-Legierung. Die Federelemente liegen in Umfangsrichtung lose aneinander, wobei sie sich im eingebauten Zustand gegeneinander unter Druck setzen. Die einzelnen Federelemente 2 sind aus unterschiedlichen Memory-Legierungen, deren Formänderung jeweils bei einer anderen Grenztemperatur einsetzt. Dadurch ist es möglich, daß die auf den Ölabstreifring 1 wirkende Federkraft über einen großen Temperaturbereich in Stufen zwischen z. B. etwa 100 und 250°C veränderbar ist, wobei die Anzahl dieser Stufen maximal gleich derjenigen der Anzahl der Federelemente ist. Zusatzlich kann selbstverständlich auch noch der Ölabstreifring 1 selbst aus einem Memory-Material sein, das bei Überschreiten einer bestimmten Temperatur eine Formveränderung bewirkt.

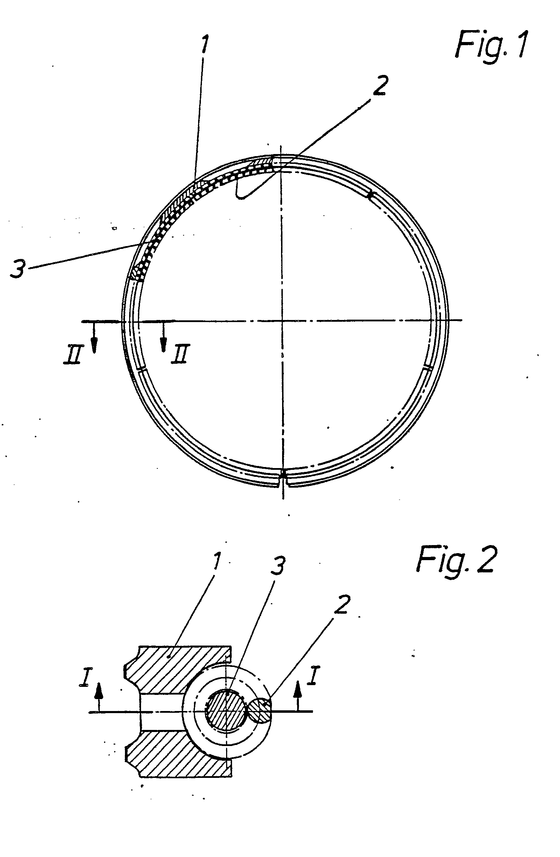

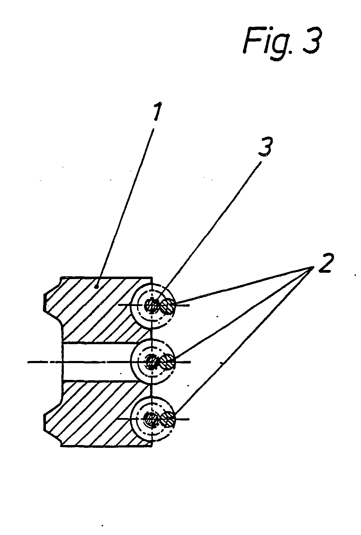

In Fig. 3 sind die Federelemente 2 axial übereinander angeordnet. Im einfachsten Fall ist jedes dieser axial übereinanderliegenden Federelemente 2 als eine einzige zylindrische Ringfeder ausgebildet. Es ist aber auch möglich, die axial übereinanderliegenden Ringfederelemente jeweils für sich auf dem Ringumfang segmentförmig wie in dem Ausführungsbeispiel nach den Fig. 1 und 2 aufzubauen.

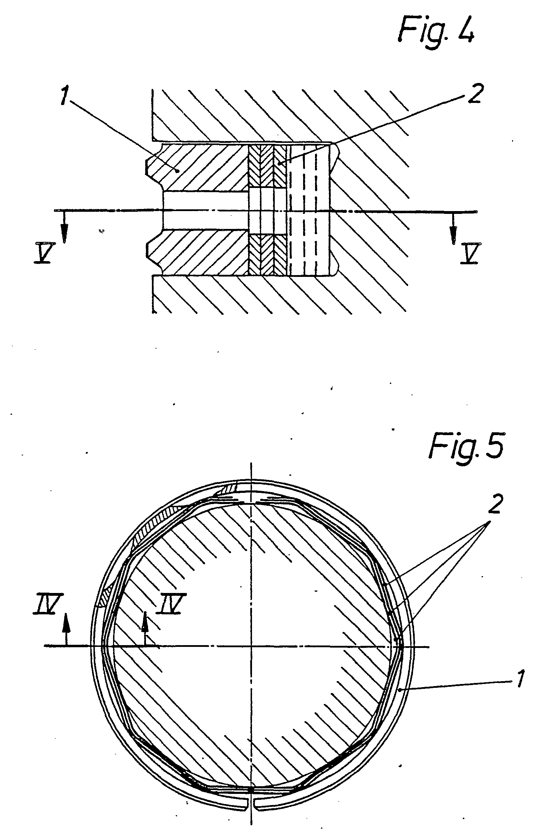

Bei dem Ausführungsbeispiel nach den Fig. 4 und 5 sind die Federelemente 2 radial ineinander angeordnet und jeweils aus unterschiedlichem Memory-Material.

## Patentansprüche

1. Mit Federmitteln (2) versehender Ölabstreifring (1) für Kolben, insbesondere für Verbrennungsmotoren, bei dem die gegen die Zylinderwand wirkende Anpreßkraft von einem sich bei Temperaturänderungen verformenden Material abhängig ist, dadurch gekennzeichnet, daß das Material des Ölabstreifringes (1) selber und/oder der Federmittel (2) zumindest teilweise aus dem Bereich der Memory-Legierung stammt.

2. Ölabstreifring nach Anspruch 1, dadurch gekennzeichnet, daß der Ölabstreifring (1) und die Federmittel (2) aus Memory-Legierungen mit unterschiedlichen die Formänderung auslösenden Temperaturbereichen bestehen.

3. Ölabstreifring nach einem der vorhergehenden Ansprüchen, dadurch gekennzeichnet, daß der Ölabstreifring (1) und/oder die Federmittel (2) aus jeweils zumindest in Wirkverbindung stehenden Einzelstücken aus Memory-Legierungen mit unterschiedlichen die Formänderung auslösenden Temperaturbereichen bestehen.

4. Ölabstreifring nach Anspruch 3, dadurch gekennzeichnet, daß die Wirkverbindung in einer Verschweißung der Einzelstücke besteht.

5. Ölabstreifring nach Anspruch 4, dadurch gekennzeichnet, daß die Wirkverbindung in einer formschlüssigen Verbindung der Einzelstücke besteht.

6. Ölabstreifring nach Anspruch 5, dadurch gekennzeichnet, daß das oder die aus der Memory-Legierung bestehenden Teile des Ölabstreifringes (1) und/oder der Federmittel (2) mit einer wärmedämmenden Isolierschicht ummantelt sind.

## Revendications

1. Segment (1) râcleur d'huile comportant des moyens (2) formant ressorts, destinés à des pistons, en particulier des pistons de moteurs à combustion interne, dans lequel la force d'appui qui s'exerce sur la paroi de cylindre dépend d'un matériau qui se déforme lors des variations de température, segment caractérisé en ce que le matériau du segment (1) râcleur d'huile mui-même et/ou des moyens (2) formant ressorts provient au moins partiellement du domaine des alliages à mémoire.

2. Segment râcleur d'huile selon la revendication 1, caractérisé en ce que le segment(s) racleur(s) d'huile et le moyen (2) formant ressort sont constitués par des alliages à mémoire comportant des plages différentes de températures déclenchant le changement de forme.

3. Segment râcleur d'huile selon une des revendications, caractérisé en ce que le segment (1) râcleur d'huile et/ou les moyens (2) formant ressorts sont constitués par des pièces individuelles qui sont, dans chaque cas, au moins en situation de liaison fonctionnelle, et sont réalisées en des alliages à mémoire comportant des plages différentes de températurs déclenchant le changement de forme.

4. Segment râcleur d'huile, selon la revendication 3, caractérisé en ce que la liaison fonctionnelle est constituée par une soudure des pièces individuelles.

5. Segment râcleur d'huile selon la revendication 4, caractérisé en ce que la liaison fonctionnelle est constituée par une liaison de conformation géométrique des pièces individuelles.

6. Segment râcleur d'huile selon la revendication 5, caractérisé en ce que les autres pièces de segment (1) râcleur d'huile, constituées par un alliage à mémoire, sont munies d'une enveloppe formée par une couche d'isolation calorifuge.

## Claims

1. An oil wiping ring (1), provided with spring means (2), for pistons, in particular for internal combustion engines, in which the pressing force acting against the cylinder wall is dependent upon a material which deforms due to temperature changes, characterised in that the material of the oil wiping ring (1) itself and/or of the spring means (2) originates at least in part from the sphere of memory alloys.

2. An oil wiping ring according to Claim 1, characterised in that the oil wiping ring (1) and spring means (2) consist of memory alloys whose change of shape is triggered by differing temperature ranges.

3. An oil wiping ring according to one of the preceding claims, characterised in that the oil wiping ring (1) and/or the spring means (2) each consist of individual parts of memory alloys which at least co-operate and whose change of shape is triggered by differing temperature ranges.

4. An oil wiping ring according to Claim 3, characterised in that the co-operation consists in the welding of the individual parts.

5. An oil wiping ring according to Claim 4, characterised in that the co-operation consists in a positive connection of the individual parts.

6. An oil wiping ring according to Claim 5, characterised in that the parts of the oil wiping ring (1) and/or of the spring means (2) composed of memory alloy are sheathed with a heat insulating layer.

*Fig.1*

*Fig.2*

Fig. 3

*Fig. 4*

*Fig. 5*

3